# EUROPÄISCHE PATENTSCHRIFT

(11) **EP 2 423 089 B1**
(45) Veröffentlichungstag und Bekanntmachung des Hinweises auf die Patenterteilung: **19.10.2016**
(21) Anmeldenummer: 11167839.7
(22) Anmeldetag: 27.05.2011
(51) Int. Cl.: B62K 21/26

(54) **Fahrradgriff**
Bicycle handlebar grip
Poignée de vélo

(30) Priorität: 30.08.2010 DE 202010011987 U
(43) Veröffentlichungstag der Anmeldung: 29.02.2012
(73) Patentinhaber: RTI Sports GmbH, 56070 Koblenz (DE)
(72) Erfinder: Tofaute, Kim, 56112 Lahnstein (DE); Krause, Andreas, 56068 Koblenz (DE)
(74) Vertreter: dompatent von Kreisler Selting Werner - Partnerschaft von Patent- und Rechtsanwälten mbB

(56) Entgegenhaltungen:
- WO-A1-2011/141828
- DE-U1- 20 019 909
- DE-U1-202004 008 297
- FR-A1- 2 138 004

## Beschreibung

Die Erfindung betrifft einen Fahrradgriff, insbesondere einen Fahrradgriff für Mountainbikes und Trekkingfahrräder.

Beim Fahrradfahren ist die Hand des Fahrradfahrers großen Belastungen ausgesetzt. Dies gilt insbesondere beim Fahren auf unebenen Strecken. Dies führt häufig dazu, dass das Handgelenk schmerzt oder die Finger taub werden. Es ist daher bereits seit langem bekannt, Fahrradgriffe derart auszugestalten, dass sie zusätzlich zu einem Greifelement ein Handballen-Abstützelement aufweisen. Hierbei ist das Greifelement, wie bei herkömmlichen Fahrradgriffen üblich, beispielsweise im Wesentlichen zylindrisch ausgebildet und umgibt im montierten Zustand den Fahrradlenker. Mit dem Greifelement ist das Handballen-Abstützelement verbunden. Bei dem Handballen-Abstützelement handelt es sich um einen in Richtung des Fahrradfahrers weisenden Ansatz, der zur flächigen Unterstützung des Handballens dient. Derartige Fahrradgriffe sind seit langem bekannt und beispielsweise bereits in DE 688 541 C beschrieben.

Ein Fahrradgriff, der ebenfalls ein mit dem Greifelement verbundenes Handballen-Abstützelement aufweist und eine sehr gute ergonomische Handhaltung gewährleistet, ist in EP 1 712 460 beschrieben. Dieser Fahrradgriff weist eine innenliegende, im Wesentlichen zylindrisch ausgebildete Hülse aus hartem Material auf. Die Hülse ist von einem Greifelement aus weicherem Material umgeben. Hierdurch kann eine Dämpfung und somit eine ergonomische Verbesserung erzielt werden.

Die Hülse aus hartem Kunststoffmaterial ist mit einem flügelförmigen Ansatz verbunden. Dieser ist von dem Handballen-Abstützelement umgeben. Der flügelförmige Ansatz ist somit innerhalb des Handballen-Abstützelements angeordnet und skelettartig entsprechend einem Versteifungselement ausgebildet.

Hierdurch ist es möglich, auch das Abstützelement aus weichem Kunststoffmaterial auszubilden und zusätzlich ein relativ großes Abstützelement vorzusehen. Hierdurch ist ein äußerst ergonomisches Abstützen des Handballens möglich.

Um ein Verdrehen des Fahrradgriffs aufgrund der Krafteinwirkung auf das Handballen-Abstützelement zu vermeiden, ist ein Klemmmittel, wie eine insbesondere ringförmige Schelle, vorgesehen. Diese umgibt die Hülse an einem äußeren Randbereich, in dem die Hülse einen Hülsenschlitz aufweist. Durch ein Klemmelement wie eine Schraube kann das schellenartige Klemmmittel zusammengezogen werden und bewirkt somit ein Verringern des inneren Hülsendurchmessers im Bereich des Hülsenschlitzes. Hierdurch kann der Fahrradgriff klemmend mit dem Lenker verbunden werden, so dass ein Verdrehen des Fahrradgriffs auch bei hohen Krafteinwirkungen auf das Handballen-Abstützelement vermieden ist. Zur weiteren Verbesserung der Ergonomie ist das Handballen-Abstützelement bei dem in EP 1 712 460 beschriebenen Fahrradgriff derart ausgebildet, dass es in den Klemmbereich ragt und das Klemmmittel somit in den Fahrradgriff integriert ist bzw. einen Teil der Haltefläche bildet.

Aufgabe der Erfindung ist es, einen Fahrradgriff, der insbesondere für Mountainbikes und Trekkingfahrräder geeignet ist, zu schaffen, der eine weiter verbesserte Ergonomie aufweist.

Die Lösung der Aufgabe erfolgt erfindungsgemäß durch die Merkmale des Anspruchs 1.

Der erfindungsgemäße Fahrradgriff weist ein Greifelement auf. Bei dem Greifelement handelt es sich um ein vorzugsweise im Wesentlichen zylindrisches Element aus Kunststoff, das im montierten Zustand den Fahrradlenker umgibt und von den Fingern umgriffen wird. Ferner weist der erfindungsgemäße Fahrradgriff ein Handballen-Abstützelement auf, das mit dem Greifelement verbunden ist. Das Handballen-Abstützelement ragt im montierten Zustand in Richtung des Fahrradfahrers, so dass der Handballen von dem HandballenAbstützelement abgestützt wird. Dies führt insbesondere bei unebenen Strecken sowie auch beim Downhill zu erheblichen Entlastungen des Handgelenks. Das Handballen-Abstützelement ist hierbei in Draufsicht vorzugsweise bogenförmig ausgebildet. Erfindungsgemäß ist die Ergonomie des Fahrradgriffs dadurch verbessert, dass das Handballen-Abstützelement Bereiche mit unterschiedlicher Flexibilität aufweist. Hierbei ist die Flexibilität der Bereiche des HandballenAbstützelements derart ausgebildet, dass in den einzelnen Bereichen bei Druckkräften durch den Handballen das Handballen-Abstützelement unterschiedlich flexibel ist bzw. unterschiedlich nachgibt. Hierbei ist ein innerer Bereich des Handballen-Abstützelements, d.h. derjenige Bereich, in dem der dem Daumen zugewandte Bereich des Handballens abgestützt wird, flexibler ausgebildet als der äußere Bereich. Diese Flexibilität führt zu einer weiteren Entlastung der Handgelenke, da gerade in diesem Bereich hohe Kräfte sowie Stöße auftreten.

Die erfindungsgemäße unterschiedliche Flexibilität des HandballenAbstützelements kann durch Verwendung unterschiedlicher Materialien in den unterschiedlichen Bereichen hervorgerufen werden. Neben der geeigneten Auswahl des Materials kann dieses auch unterschiedliche geometrische Formen, insbesondere eine unterschiedliche Dicke, aufweisen. Beispielsweise kann auch durch die unterschiedliche Wahl der Dichte des Materials eine niedrigere oder höhere Flexibilität erzielt werden.

Bei dem erfindungsgemäßen Fahrradgriff ist innerhalb des HandballenAbstützelements mindestens ein Versteifungselement vorgesehen. Die unterschiedliche Flexibilität in den einzelnen Bereichen wird hierbei durch das mindestens eine Versteifungselement realisiert. Dies hat den wesentlichen Vorteil, dass das Versteifungselement vollständig mit Kunststoffmaterial umgeben werden kann. Das Material kann hierbei unabhängig von der geforderten Flexibilität gewählt werden, so dass beispielsweise dämpfende Materialien und/oder Materialien mit hoher Rutschfestigkeit etc. ausgewählt werden können. Ein derartiges Versteifungselement kann insbesondere vollständig mit einem weicheren Kunststoff umgeben sein.

Beispielsweise kann es sich bei dem Versteifungselement um ein einziges Versteifungselement handeln. Die Flexibilität des Versteifungselements kann hierbei auf unterschiedliche Weisen variiert werden. Beispielsweise kann um an einem äußeren Bereich eine geringe Flexibilität aufzuweisen als an einem inneren Bereich, die Dicke des Versteifungselements von außen nach innen abnehmen. Auch kann die geometrische Form verändert werden. Ferner kann das Versteifungselement Unterbrechungen oder Ausnehmungen aufweisen, deren Dichte und/oder Abmessungen variieren, um eine entsprechend variierende Flexibilität hervorzurufen. Auch kann die Materialzusammensetzung verändert werden. Selbstverständlich sind die unterschiedlichen Möglichkeiten zur Veränderung der Flexibilität des Versteifungselements auch miteinander kombinierbar.

In besonders bevorzugter Ausführungsform sind zwei oder drei Versteifungselemente vorgesehen, die nebeneinander angeordnet sind. Ein äußeres Versteifungselement bildet somit den äußeren Bereich und weist eine relativ geringe Flexibilität auf. Entsprechend nimmt die Flexibilität der Versteifungselemente nach innen zu.

Die Flexibilität der einzelnen Versteifungselemente kann wie vorstehend erläutert bewirkt werden. Vorzugsweise sind die Versteifungselemente aus dem gleichen Material, so dass die unterschiedliche Flexibilität aufgrund der äußeren Form sowie der Dicke realisiert ist. Insbesondere sind die zwei oder drei Versteifungselemente in einem Abstand zueinander angeordnet, wobei der Abstand beispielsweise auch über Verbindungsstege miteinander verbunden sein kann, so dass ein stufenloser Übergang bzw. eine sich stufenlos verändernde Flexibilität gewährleistet ist.

Das mindestens eine Versteifungselement ist vorzugsweise zumindest teilweise, insbesondere vollständig, plattenförmig bzw. scheibenförmig ausgebildet. Hierbei ragt das Versteifungselement im montierten Zustand des Fahrradgriffs vorzugsweise im Wesentlichen in Richtung des Fahrradfahrers und verläuft somit im Wesentlichen horizontal. Plattenförmige Versteifungselemente verlaufen somit im Wesentlichen parallel zu der Griff- bzw. Lenkerlängsachse. Die entsprechenden flächigen Versteifungselemente verlaufen mit anderen Worten im Wesentlichen parallel zum Handballen.

Bei einer weiteren besonders bevorzugten Ausführungsform des erfindungsgemäßen Fahrradgriffs weist der Fahrradgriff eine Hülse aus härterem Material auf. Die Hülse ist hierbei insbesondere vollständig von dem Greifelement aus einem weicheren Material umgeben. Dies hat den Vorteil, dass das Material des Greifelements wiederum im Wesentlichen aufgrund ergonomischer Bedingungen ausgewählt werden kann. Insbesondere können rutschfeste Materialien etc. gewählt werden. Die Hülse ist vorzugsweise im Wesentlichen zylindrisch ausgebildet und erstreckt sich über die gesamte Länge des Fahrradgriffs. Aufgrund der Hülse aus härterem Material kann eine gute Stabilität des Fahrradgriffs realisiert werden. Insbesondere ist es möglich, die Hülse klemmend mit dem Fahrradlenker zu verbinden. Hierzu weist die Hülse in besonders bevorzugter Ausführungsform einen Klemmbereich mit mindestens einem Hülsenschlitz oder einer Nut auf.

Dies hat den Vorteil, dass mit Hilfe eines Klemmmittels der Innendurchmesser der Hülse bzw. die Schlitzbreite verringert werden kann, so dass ein zuverlässiges Klemmen des Fahrradgriffs am Lenker realisiert ist. Besonders bevorzugt ist es hierbei, ein schellenförmiges Klemmmittel vorzusehen, dass die Hülse vollständig umgibt. Weiter bevorzugt ist es, dass Klemmmittel derart auszugestalten, dass es in den Fahrradgriff integriert ist. Dementsprechend ist es auch bevorzugt, das Handballen-Abstützelement derart auszubilden, dass es in den Klemmbereich ragt. Die äußere Gestaltung des Fahrradgriffs stellt somit eine Einheit dar. Ausgehend von dem insbesondere schellenartigen Klemmmittel ist ein stufenloser, insbesondere geschwungener Übergang in das Handballen-Abstützelement realisiert.

Bei der bevorzugten Ausführungsform der Erfindung, bei der der Fahrradgriff eine Hülse aufweist, ist es weiter bevorzugt, dass das mindestens eine Versteifungselement mit der Hülse verbunden ist. Eine entsprechende Verbindung muss hierbei bei mehreren Versteifungselementen nicht für sämtliche, sondern kann auch nur für einen Teil der Versteifungselemente realisiert sein. Die Verbindung kann durch ein Kleben, Vulkanisieren oder dergleichen erfolgen. Besonders bevorzugt ist es bei mehreren Versteifungselementen, dass einzelne oder alle Versteifungselemente einstückig mit der Hülse ausgebildet sind. Hierdurch ist die Herstellung erheblich vereinfacht, da in beispielsweise einem ersten Spritzgussschritt die Hülse zusammen mit dem zumindest einen Versteifungselement aus einem harten Material gespritzt werden kann.

In einem oder mehreren darauffolgenden Spritzschritten wird die Hülse sowie das mindestens eine Versteifungselement sodann von einem oder mehreren weicheren Materialien umspritzt.

Die Flexibilität eines äußeren Versteifungselements oder eines äußeren Bereichs eines Versteifungselements kann dadurch verringert werden, dass das Versteifungselement in diesem Bereich im montierten Zustand mit dem Klemmmittel verbunden ist. Bei dem schellenartigen Klemmmittel ragt das Versteifungselement vorzugsweise in den Schlitz des Klemmmittels, wobei ein Klemmelement mit einer Schraube sodann durch eine in diesem Bereich des Versteifungselements vorgesehene Bohrung geführt werden kann. Das Versteifungselement wird beim klemmenden Befestigen der Hülse auf dem Fahrradlenker somit in dem Schlitz des Klemmmittels gehalten bzw. gegebenenfalls sogar fixiert. Hierdurch ist die Flexibilität des unmittelbar hieran angrenzenden äußeren Bereichs des Versteifungselements verringert.

Dies hat den Vorteil, dass beim Vorsehen mehrerer Versteifungselemente diese nicht nur aus gleichem Material, sondern auch aus gleicher Wandstärke hergestellt werden können und die Flexibilität des äußeren Versteifungselements durch eine entsprechende Verbindung mit dem Klemmmittel verringert wird.

Um bei einem Fahrradgriff mit Hülse ein sicheres Verbinden zwischen dem die Hülse und/oder dem das mindestens eine Versteifungselement umgebende Material zu verbessern, weist vorzugsweise die Hülse und/oder das mindestens eine Versteifungselement Ausnehmungen auf, die zumindest teilweise mit dem weicheren die Hülse und/oder das mindestens eine Versteifungselement umgebende Material gefüllt sind. Besonders bevorzugt ist es hierbei, dass die Füllungen der Hülsen-Ausnehmungen zumindest teilweise über eine Innenfläche der Hülse vorstehen. Hierdurch können auf einfache Weise Toleranzen zwischen dem Innendurchmesser der Hülse und dem Außendurchmesser des Lenkers ausgeglichen werden. Auch ist durch das weichere Material, das nach innen hervortritt, eine bessere Verbindung zum Lenker aufgrund der Reibungserhöhung realisiert.

Nachfolgend wird die Erfindung anhand bevorzugter Ausführungsformen näher erläutert. Es zeigen:
- Fig. 1: eine schematische Draufsicht auf eine bevorzugte Ausführungsform des erfindungsgemäßen Fahrradgriffs und
- Fig. 2: eine schematische perspektivische Ansicht einer Hülse mit zwei Versteifungselementen.

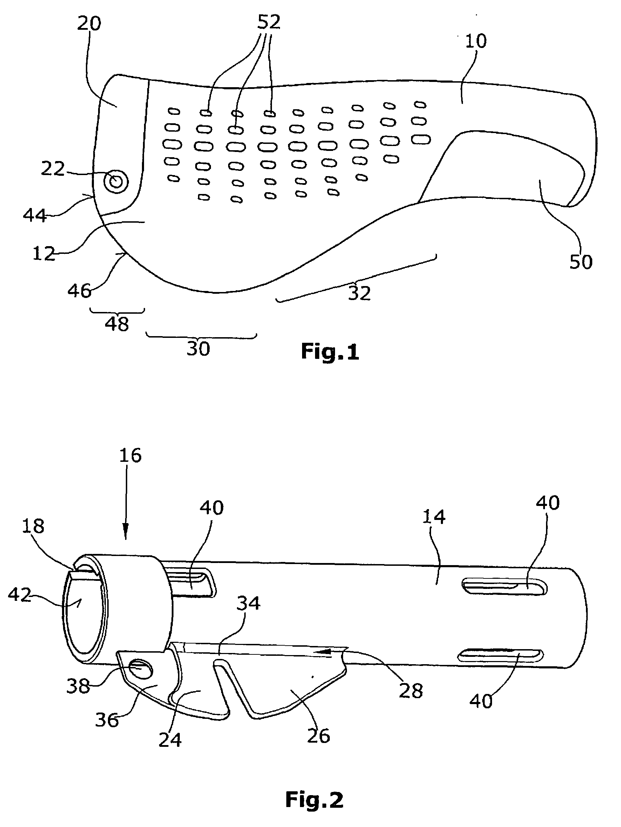

Ein erfindungsgemäßer Fahrradgriff weist ein Greifelement 10 auf. Das Greifelement 10 ist mit einem Handballen-Abstützelement 12 verbunden. Das Handballen-Abstützelement weist in Richtung des Fahrers, so dass auf dem Handballen-Abstützelement 12 der Handballen eines Fahrradfahrers abstützbar ist. Bei dem in Fig. 1 dargestellten Fahrradgriff handelt es sich im montierten Zustand um einen linken Fahrradgriff. Die Befestigung des Fahrradgriffs erfolgt mit einer innerhalb des Greifelements 10 angeordneten, von dem Greifelement 10 umspritzten Hülse 14 (Fig. 2). Ein Klemmbereich 16 der Hülse 14 weist einen Hülsenschlitz 18 auf. In diesem Bereich ist die Hülse 14 von einem Klemmmittel 20 (Fig. 1) umgeben. Das entsprechend einer Schelle im Wesentlichen ringförmig ausgebildete Klemmmittel kann über eine Schraube 22 geklemmt werden. Hierdurch wird im Klemmbereich 16 der Innendurchmesser der Hülse verringert, so dass ein klemmendes Befestigen an dem nicht dargestellten Lenker erfolgt.

Innerhalb des Handballen-Abstützelements 12 sind im dargestellten Ausführungsbeispiel zwei Versteifungselemente 24,26 angeordnet. Die aus einem harten Kunststoffmaterial hergestellten Versteifungselemente 24,26 sind von weicherem Kunststoffmaterial umspritzt. Dieses bildet sodann die Außenseite des Handballen-Abstützelements 12 (Fig.1) aus.

Die Versteifungselemente 24,26, die zur Versteifung des Handballen-Abstützelements 12 dienen, sind im dargestellten Ausführungsbeispiel einstückig mit der Hülse 14 ausgebildet. Insbesondere handelt es sich hierbei um ein Spritzgussteil aus hartem Kunststoffmaterial. Um eine sichere belastbare Verbindung der Versteifungselemente 24,26 mit der Hülse 14 zu gewährleisten, sind in dem Verbindungsbereich 28 Übergänge mit großen Radien vorgesehen.

Durch das Vorsehen skelettartiger Versteifungselemente 24,26 ist ein stabiles Handballen-Abstützelement 12 realisiert. Da mehrere im Ausführungsbeispiel skelettartige, flächige dargestellte Versteifungselemente 24,26 vorgesehen sind, ist es möglich, Bereiche 30,32 des Handballen-Abstützelements mit unterschiedlicher Flexibilität auszubilden. Hierbei ist es bevorzugt, dass der äußere Bereich 30 eine geringere Flexibilität als der innere Bereich 32 aufweist. Dies kann durch unterschiedliche geometrische Ausgestaltungen, unterschiedliches Material, unterschiedliche Dicke etc. der beiden Versteifungselemente 24,26 realisiert werden. Das Material, mit dem die Versteifungselemente 24,26 und üblicherweise auch die Hülse 14 umspritzt werden, kann hierbei im Wesentlichen unabhängig von der gewünschten Flexibilität gewählt werden.

Im dargestellten Ausführungsbeispiel sind die beiden Versteifungselemente 24,26 über einen Steg 34 miteinander verbunden. Der Steg ist im Bereich der Verbindung zwischen den Versteifungselementen 24,26 und der Hülse 14 vorgesehen, so dass ein möglichst durchgehender gleichmäßiger Verbindungsbereich zwischen den Versteifungselementen 24,26 und der Hülse 14 realisiert ist.

Bei dem dargestellten besonders bevorzugten Ausführungsbeispiel der Erfindung ist die Flexibilität des äußeren Versteifungselements 24 dadurch verringert, dass ein Ansatzstück bzw. Teilstück 36 des äußeren Versteifungselements 24 mit dem Klemmmittel 20 verbunden ist. Dies ist bei dem dargestellten Ausführungsbeispiel dadurch realisiert, dass der Ansatz 36 in den Schlitz des schellen- bzw. ringförmigen Klemmmittels 20 ragt. Zum Schließen des Klemmmittels, d.h. zum Verklemmen des Fahrradgriffs auf dem Lenker, wird die Schraube 22 durch die entsprechenden Öffnungen in dem Klemmmittel 20 sowie auch durch die Öffnung 38 gesteckt. Selbst wenn der Ansatz 36 in dem Schlitz des Klemmmittels 20 noch etwas Spiel hat, ist die Flexibilität des Versteifungselements 24 hierdurch stark eingeschränkt, da bereits beim geringen Biegen des Versteifungselements 24 dieses an der Schelle bzw. dem Klemmmittel 20 anliegt.

Im Unterschied hierzu ist das innere Versteifungselement 26 nicht mit dem Klemmmittel 20 verbunden und weist somit eine größere Flexibilität auf.

Ferner kann die Hülse 14 sowie gegebenenfalls zusätzlich auch die Versteifungselemente 24,26 Ausnehmungen 40 aufweisen. Durch die Ausnehmungen 40 dringt beim Umspritzen der Hülse 14 sowie der Versteifungselemente 24,26 Material nach innen. Die hierdurch entstehenden Füllungen stehen vorzugsweise über eine Innenseite 42 der Hülse 14 vor. Hierdurch können Toleranzen zwischen dem Innendurchmesser der Hülse 14 und dem Außendurchmesser des Lenkers ausgeglichen werden. Auch gerade aufgrund der gegebenenfalls höheren Reibung des in die Ausnehmungen 40 eindringenden Materials kann eine sichere Klemmung an dem Fahrradlenker gewährleistet werden.

Besonders bevorzugt ist, dass in der äußeren Ausgestaltung des Fahrradgriffs das Klemmmittel 20 in den Fahrradgriff integriert ist. Eine Außenseite 44 (Fig. 1) des Klemmmittels 20 geht somit stufenfrei in eine Außenseite 46 des Handballen-Abstützelements über. Um einen fließenden Übergang zu gewährleisten, weist das Handballen-Abstützelement 12 einen Ansatz 48 auf, der in Längsrichtung des Fahrradgriffs in den Klemmbereich ragt.

Da aufgrund des Vorsehens einer Hülse 14 sowie den innenliegenden skelettartigen Versteifungselementen 24,26 die äußere Gestaltung bzw. Hülle des Fahrradgriffs hinsichtlich des Materials im Wesentlichen frei gewählt werden kann, ist es ferner möglich, Bereiche 50 mit weiteren Materialien auszugestalten bzw. aufzufüllen. Auch können Oberflächenstrukturen, wie Noppenrillenausnehmungen 52 etc. vorgesehen sein.

## Patentansprüche

1. Fahrradgriff, insbesondere für Mountainbikes und/oder Trekkingfahrräder, mit
- einem Greifelement (10) und
- einem mit dem Greifelement (10) verbundenen Handballen-Abstützelement (12),
wobei das Handballen-Abstützelement (12) Bereiche (30,32) unterschiedlicher Flexibilität aufweist, und
wobei innerhalb des Handballen-Abstützelements (12) mindestens ein die Flexibilität im Wesentlichen bestimmendes Versteifungselement (24,26) angeordnet ist,
**dadurch gekennzeichnet , dass**
der äußere Bereich (30) des Handballen-Abstützelements (12) eine geringere Flexibilität als der innere Bereich (32) des Handballen-Abstützelements (12), in dem der dem Daumen zugewandte Bereich des Handballens abgestützt wird, aufweist.

2. Fahrradgriff nach Anspruch 1, **dadurch gekennzeichnet, dass** das mindestens eine Versteifungselement (24,26) zumindest teilweise plattenförmig ausgebildet ist und vorzugsweise im Wesentlichen horizontal verläuft.

3. Fahrradgriff nach Anspruch 1 oder 2, **dadurch gekennzeichnet, dass** das Greifelement (10) eine insbesondere härteres Material aufweisende Hülse (14) umgibt.

4. Fahrradgriff nach Anspruch 3, **dadurch gekennzeichnet, dass** die Hülse in einem Klemmbereich (16) mindestens einen Hülsenschlitz (18) aufweist, dessen Breite mittels eines Klemmmittels (20) verringerbar ist.

5. Fahrradgriff nach Anspruch 3 oder 4, **dadurch gekennzeichnet, dass** das mindestens eine Versteifungselement (24,26) mit der Hülse verbunden und vorzugsweise einstückig ausgebildet ist.

6. Fahrradgriff nach Anspruch 4 oder 5, **dadurch gekennzeichnet, dass** das mindestens eine Versteifungselement (24) im montierten Zustand mit dem Klemmmittel (20) verbunden ist, insbesondere in einen Schlitz eines vorzugsweise ringförmig ausgebildeten Klemmmittels (20) ragt.

7. Fahrradgriff nach einem der Ansprüche 1 bis 6, **dadurch gekennzeichnet, dass** die Hülse (14) und/oder das mindestens eine Versteifungselement (24,26) Ausnehmungen (40) aufweist, die zumindest teilweise mit weicherem Material, insbesondere dem Material des Greifelements (10) bzw. des Handballen-Abstützelements (12), gefüllt sind.

8. Fahrradgriff nach Anspruch 7, **dadurch gekennzeichnet, dass** die Füllungen der Hülsen-Ausnehmungen (40) zumindest teilweise über eine Innenfläche (42) der Hülse (14) vorstehen.

9. Fahrradgriff nach einem der Ansprüche 4 bis 8, **dadurch gekennzeichnet, dass** das Handballen-Abstützelement (12) in den Klemmbereich (16) ragt.

## Claims

1. A bicycle handlebar grip, in particular for mountain bikes and/or trekking bikes, comprising
- a grip element (10), and
- a supporting element (12) for the heel of the hand connected with said grip element (10),
- wherein said supporting element (12) for the heel of the hand comprises areas (30,32) of different flexibilities, and
- wherein, inside the supporting element (12) for the heel of the hand, at least one reinforcement element (24,26) is arranged which essentially determines the flexibility,
**characterized in that**
the outer area (30) of the supporting element (12) for the heel of the hand has a lower flexibility than the inner area (32) of the supporting element (12) for the heel of the hand in which the area of the heel of the hand facing toward the thumb is supported.

2. The bicycle handlebar grip according to claim 1, **characterized in that** the at least one reinforcement element (24,26) is at least partly of a plate-shaped configuration and preferably extends horizontally.

3. The bicycle handlebar grip according to claim 1 or 2, **characterized in that** the grip element (10) surrounds a sleeve (14) which comprises in particular a harder material.

4. The bicycle handlebar grip according to claim 3, **characterized in that**, in a clamping area (16), the sleeve comprises at least one sleeve slot (18) whose width is adapted to be reduced with the aid of a clamping means (20).

5. The bicycle handlebar grip according to claim 3 or 4, **characterized in that** at least one reinforcement element (24,26) is connected with the sleeve and is preferably integrally formed with the sleeve.

6. The bicycle handlebar grip according to claim 4 or 5, **characterized in that** at least one reinforcement element (24), when in its mounted state, is connected with the clamping means (20) and in particular extends into a slot of a preferably ring-shaped clamping means (20).

7. The bicycle handlebar grip according to any one of claims 1 to 6, **characterized in that** the sleeve (14) and/or the at least one reinforcement element (24,26) comprises recesses (40) which at least partly are filled with a softer material, in particular the material of the grip element (10) and/or the supporting element (12) for the heel of the hand.

8. The bicycle handlebar grip according to claim 7, **characterized in that** the fillings of the sleeve recesses (40) protrude at least partly beyond an inner surface (42) of the sleeve (14).

9. The bicycle handlebar grip according to any one of claims 4 to 8, **characterized in that** the supporting element (12) for the heel of the hand extends into the clamping area (16).

## Revendications

1. Poignée de vélo, en particulier pour VTT et/ou vélos de trekking, comprenant
- un élément de préhension (10), et
- un élément d'appui de la paume (12), relié à l'élément de préhension (10),
dans laquelle l'élément d'appui de la paume (12) comprend des zones (30, 32) ayant des souplesses différentes, et
dans laquelle au moins un élément de rigidification (24, 26), qui pour l'essentiel détermine la souplesse, est disposé à l'intérieur de l'élément d'appui de la paume (12),
**caractérisé en ce que** la zone extérieure (30) de l'élément d'appui de la paume (12) présente une souplesse plus faible que la zone intérieure (32) de l'élément d'appui de la paume (12) dans lequel s'appuie la zone de la paume orientée vers le pouce.

2. Poignée de vélo selon la revendication 1, **caractérisée en ce que** le ou les éléments de rigidification (24, 26), au moins au nombre de un, sont au moins partiellement conçus sous la forme de plaques, et s'étendent de préférence essentiellement horizontalement.

3. Poignée de vélo selon la revendication 1 ou 2, **caractérisée en ce que** l'élément de préhension (10) entoure un manchon (14), en particulier comprenant un matériau plus dur.

4. Poignée de vélo selon la revendication 3, **caractérisée en ce que** le manchon présente dans une zone de serrage (16) au moins une rainure de manchon (18), dont la largeur peut être diminuée à l'aide d'un moyen de serrage (20).

5. Poignée de vélo selon la revendication 3 ou 4, **caractérisée en ce que** le ou les éléments de rigidification (24, 26), au moins au nombre de un, sont reliés au manchon, et de préférence sont réalisés d'une seule pièce.

6. Poignée de vélo selon la revendication 4 ou 5, **caractérisée en ce que** le ou les éléments de rigidification (24), au moins au nombre de un, sont reliés à l'état monté au moyen de serrage (20), en particulier dépassent dans une rainure d'un moyen de serrage (20) exécuté de préférence en une configuration annulaire.

7. Poignée de vélo selon l'une des revendications 1 à 6, **caractérisée en ce que** le manchon (14) et/ou le ou les éléments de rigidification (24, 26), au moins au nombre de un, comprennent des évidements (40) qui sont remplis au moins partiellement d'un matériau plus souple, en particulier du matériau de l'élément de préhension (10) ou de l'élément d'appui de la paume (12).

8. Poignée de vélo selon la revendication 7, **caractérisée en ce que** les remplissages des évidements (40) du manchon dépassent au moins partiellement au-delà d'une surface intérieure (42) du manchon (14).

9. Poignée de vélo selon l'une des revendications 4 à 8, **caractérisée en ce que** l'élément d'appui de la paume (12) dépasse dans la zone de serrage (16).
